Europäisches Patentamt

**European Patent Office**

**Office européen des brevets**

(11) Numéro de publication : **0 037 311**
**B1**

(12) # FASCICULE DE BREVET EUROPÉEN

(45) Date de publication du fascicule du brevet :
05.10.83

(51) Int. Cl.³ : **H 01 R 43/00**

(21) Numéro de dépôt : **81400423.0**

(22) Date de dépôt : **18.03.81**

(54) **Procédé et machine pour le surmoulage de connecteurs sur des conducteurs électriques.**

(30) Priorité : **31.03.80 FR 8007185**

(43) Date de publication de la demande :
**07.10.81 Bulletin 81/40**

(45) Mention de la délivrance du brevet :
**05.10.83 Bulletin 83/40**

(84) Etats contractants désignés :
**AT BE CH DE GB IT LI LU NL SE**

(56) Documents cités :
**FR A 1 458 756**
**FR A 2 282 772**
**US A 3 009 197**
**US A 3 963 822**
**US A 4 035 123**

(73) Titulaire : **Prus, Henryk**
**2, Square François Couperin**
**F-92160 Antony (FR)**

(72) Inventeur : **Prus, Henryk**
**2, Square François Couperin**
**F-92160 Antony (FR)**

(74) Mandataire : **Madeuf, Claude Alexandre Jean et al**
**CABINET MADEUF 3, avenue Bugeaud**
**F-75116 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Procédé et machine pour le surmoulage de connecteurs sur des conducteurs électriques

Les différents équipements électriques de machines ou de véhicules comportent des faisceaux de conducteurs qui relient des appareillages divers. Les conducteurs de ces faisceaux avant la constitution des faisceaux doivent recevoir à leurs extrémités des connecteurs mâles ou femelles à une ou plusieurs broches ou conduits. Les connecteurs doivent ensuite être isolés, cet isolement étant réalisé avantageusement par un surmoulage d'une matière thermoplastique.

Dans l'état actuel de la technique, les connecteurs sont sertis sur l'extrémité dénudée des conducteurs avant d'être surmoulés, cette opération de sertissage s'effectuant à très vive cadence dans des machines prévues à cet effet qui sont utilisées sur une grande échelle.

Les conducteurs munis de leurs connecteurs doivent ensuite être amenés à des machines de surmoulage qui injectent de la matière plastique sur les parties des connecteurs devant être isolés.

Dans une machine à injecter, la matière thermoplastique introduite dans le moule doit y rester normalement jusqu'à sa solidification complète. La durée de cette solidification est sensiblement plus longue que la durée d'un sertissage. Pour cette raison on ne pouvait pas jusqu'à présent réduire la durée du cycle de travail de la machine à surmouler et le synchroniser avec le cycle de travail de la machine à sertir sans ralentir considérablement la cadence de cette dernière.

L'art antérieur par exemple, le document FR-A-1 458 756 révèle l'existence d'un procédé pour effectuer le moulage d'un conducteur en deux étapes, à savoir d'abord un prémoulage, ensuite un surmoulage. Pour accélérer la cadence de travail, les fiches prémoulées qui sont extraites du moule avant que la matière plastique soit en mesure de maintenir en place les lames conductrices et qui sont maintenues en place par une plaque support, subissent un refroidissement forcé par de l'air frais circulant autour des fiches.

La présente invention permet de résoudre ce problème et de combiner les machines de sertissage avec une nouvelle machine de surmoulage des connecteurs en mettant en œuvre un nouveau procédé.

Conformément à l'invention, le procédé pour le surmoulage par une matière thermoplastique de connecteurs, préalablement mis en place sur l'extrémité de conducteurs électriques, dans lequel le surmoulage est effectué dans une presse à injection dans le moule de laquelle le connecteur relié à son conducteur est amené, et dans lequel on procède à l'extraction du connecteur surmoulé avant refroidissement complet de la matière surmoulée est caractérisé en ce qu'on amène ensuite le connecteur surmoulé dans le moule d'une seconde presse, ledit moule étant maintenu à une température plus basse que le premier moule, inférieure à celle pour laquelle il serait possible d'introduire la matière thermoplastique, le transfert du connecteur surmoulé,

du premier moule au deuxième étant suffisamment rapide pour prévenir une déformation de la matière non encore solidifiée.

Pour la mise en œuvre du procédé ci-dessus, l'invention crée une machine pour le surmoulage d'une matière thermoplastique sur des connecteurs sertis sur l'extrémité dénudée de conducteurs, machine qui est caractérisée par un transporteur amenant les connecteurs de la machine de sertissage à un premier poste qui comporte des moyens pour la mise en place d'un noyau dans ou sur les parties du connecteur devant être préservées d'un surmoulage, puis à un second poste comportant une presse à injecter dont le moule est maintenu à une température appropriée permettant l'introduction de la matière de surmoulage et à un troisième poste comportant une presse munie d'un moule analogue à celui de la presse à injecter, mais maintenus à une température plus basse, inférieure à celle pour laquelle une injection de matière plastique serait possible.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La figure 1 est une perspective en partie schématique d'un connecteur en forme de cosse devant être surmoulé par la machine de l'invention.

La figure 2 est un plan partiel schématique vu de dessus de la partie essentielle de la machine à surmouler.

La figure 3 est une élévation schématique partielle de la machine à surmouler vue sensiblement suivant la ligne III-III de la figure 2.

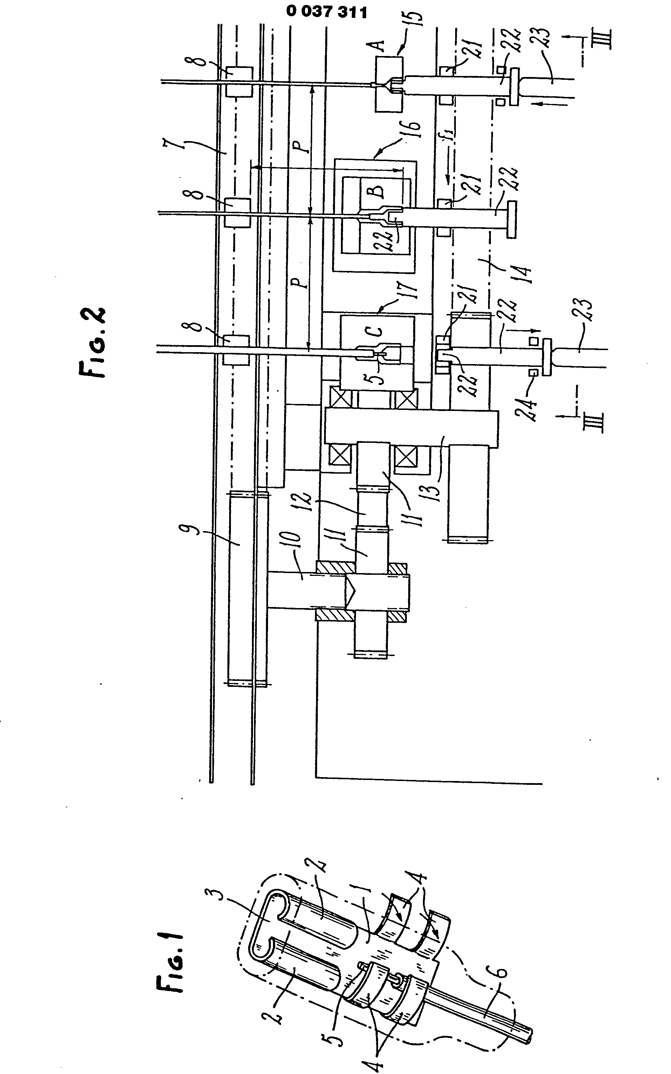

La figure 1 illustre un connecteur pris parmi les connecteurs simples en forme de cosse qui sont utilisés dans de nombreux domaines de la technique, en particulier en électricité automobile.

De façon bien connue, ce connecteur comporte une plaquette métallique 1 à partir de laquelle sont roulées deux pinces 2 destinées à délimiter un couloir 3 devant être enfilé sur un connecteur mâle. La plaquette 1 forme aussi des pattes 4 devant être serties sur la partie dénudée d'un conducteur 5 dont 6 désigne la gaine isolante.

Les connecteurs décrits ci-dessus ou d'autres connecteurs sont sertis sur une machine non représentée à laquelle les plaquettes 1 sont amenées de façon connue en soi de même que les conducteurs 5 préalablement coupés à la longueur désirée. Cette machine comporte un transporteur 7 qui est muni de pinces 8 maintenant les conducteurs 5 par leur gaine à distance de l'extrémité dénudée du conducteur 5.

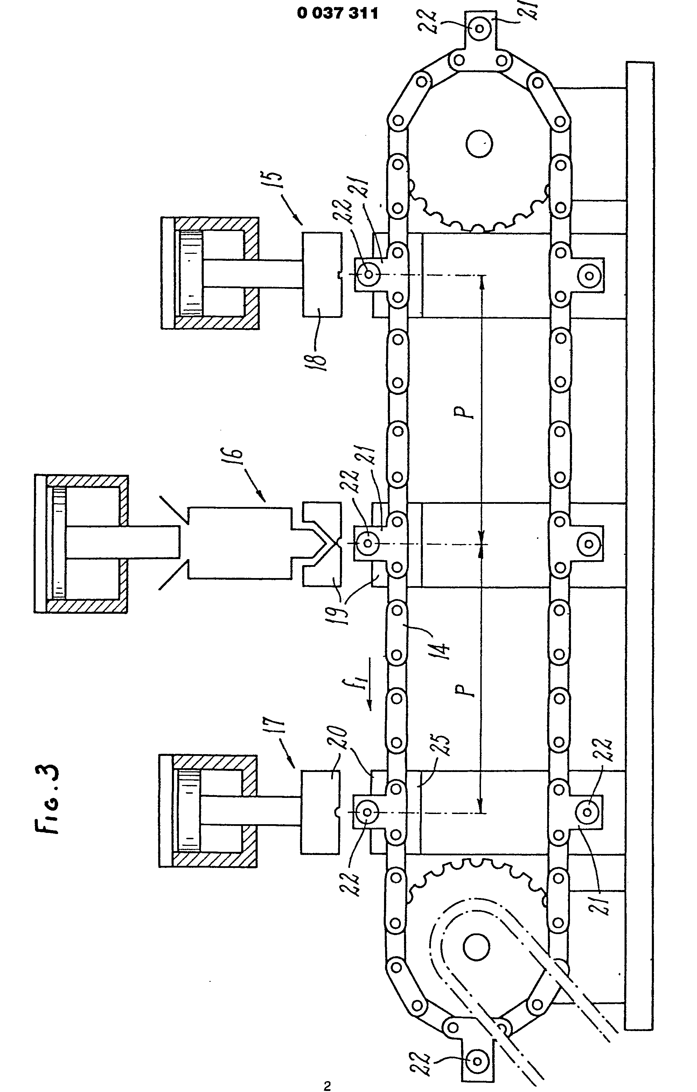

Dans la réalisation illustrée à la figure 2, le transporteur 7 est par exemple du type à chaîne et il comporte une roue à chaîne 9 qui sert à l'entraînement par un arbre 10 d'une roue dentée 11 servant à son tour à l'entraînement d'une seconde chaîne 12 dont la deuxième roue 11 entraîne, par un second arbre 13, un deuxième transporteur 14. L'ensemble des organes de transmission entre les transporteurs n'est pas illustré en détail étant donné qu'il est banal dans la technique et ne fait pas directement partie de l'invention, l'essentiel étant que les deux transporteurs se déplacent en synchronisme dans un mouvement intermittent de pas p.

Il est indiqué ci-dessus que les transporteurs sont du type à chaîne mais ils pourraient également être du type à bande ou à chenille ou de tout autre type désiré.

Le second transporteur 14 qui se déplace comme le transporteur 7 dans le sens de la flèche $f_1$ passe en regard de trois presses successives 15, 16 et 17.

La presse 15 comporte, comme le montre la fig. 3, un outil 18 de saisie et de maintien des connecteurs déjà sertis.

La presse 16 est une presse à injecter une matière plastique dont le moule d'injection 19 est maintenu à une température appropriée pour faciliter le plus possible une opération d'injection, ladite température étant maintenue aussi constante que possible par une circulation d'eau ou d'un autre fluide.

La presse 17 est une presse de mise en forme et de réfrigération dont l'outil 20 est refroidi, cet outil 20 présentant exactement la forme du moule d'injection 19.

Le transporteur 14 porte des supports de mandrins 21. A l'intérieur de chaque support passe un noyau 22, destiné à être inséré dans le couloir 3 du connecteur, afin d'empêcher la pénétration de la matière thermoplastique dans ce couloir. La forme du noyau 22 varie évidemment en fonction de la forme et de la nature du connecteur et suivant que celui-ci est d'un type mâle ou femelle. Ce noyau peut coulisser à l'intérieur de son support sous l'effet de la poussée de traction d'un vérin 23.

Le dispositif décrit ci-dessus fonctionne de la façon suivante.

Le conducteur 5 et sa gaine isolante 6 munie du connecteur sont amenés par le premier transporteur 7 faisant partie de la machine de sertissage ou constituant un transporteur intermédiaire de transfert entre la machine de sertissage et la machine de l'invention au poste A, alors que l'outil de maintien 18 de la presse 15, le moule 19 de la presse 16 ainsi que l'outil 20 de la presse 17 sont ouverts.

Lors de l'arrêt au poste A du transporteur 7, les outil 18 moule 19 et outil de réfrigération 20 se ferment. La fermeture de l'outil 18 a pour effet de saisir et de maintenir le connecteur immobilisé et, à ce moment, le noyau 22, se trouvant en regard du poste A, est poussé dans le connecteur par le vérin 23. Les outil et moule sont ensuite ouverts et les transporteurs 7 et 14 font avancer le fil et le connecteur qui se trouvaient au poste A jusqu'au poste B, le noyau 22 étant toujours engagé dans le connecteur. Au poste B, la presse 16 ferme son moule et injecte la matière plastique qui est surmoulée sur le connecteur et un tronçon de sa gaine 6, le noyau 22 préservant les parties du connecteur qui doivent assurer ultérieurement une liaison électrique.

Dès que l'injection est terminée, le moule 19 est ouvert alors que la matière injectée est encore chaude et à peine solidifiée. Les transporteurs avancent alors d'un nouveau pas p, ce qui amène le connecteur sur lequel de la matière plastique vient d'être surmoulée entre les outils réfrigérés 20 de la presse 17 au poste C. Le transfert du connecteur surmoulé du premier moule au deuxième est suffisamment rapide pour prévenir une déformation de la matière non encore solidifiée. La fermeture des outils 20 assure une remise en forme éventuelle de la matière de surmoulage et son refroidissement rapide car les outils réfrigérés 20 se trouvent à une température très inférieure à la température à laquelle il serait normalement possible d'injecter de la matière, ce qui assure un refroidissement rapide en même temps que la matière de surmoulage est bien remise en forme un peu à la manière d'une mise en forme par pression. On obtient ainsi un surmoulage de très bonne qualité en même temps que le refroidissement très rapide.

Bien que cela ne soit pas représenté, il est évident que les différents outils et moules sont munis de détecteurs empêchant leur fermeture si un incident quelconque se produit. En particulier, il est prévu un détecteur de présence d'un connecteur au niveau de la presse 15. Il en est de même au niveau de la presse à injecter 16 et, éventuellement aussi, de la presse 17.

Au poste C, une pince 24 d'un vérin 23 est prévue pour ramener en arrière le noyau 22 qui était engagé dans le connecteur. Cette opération se produit juste avant l'ouverture des outils réfrigérés. Lors d'une avance suivante, c'est le premier transporteur 7 qui entraîne le conducteur muni du connecteur surmoulé au-delà du transporteur 14 jusqu'à un poste de déchargement des conducteurs.

Comme l'illustre la fig. 3, le transporteur 14 est constitué sous la forme d'un transporteur sans fin qui comporte un jeu de mandrins 21 et des moyens pour leur support et leur guidage, les différents mandrins 21 étant séparés d'une distance correspondant au pas p.

Aux différents postes de travail décrits, les moyens de support des tiges 21 sont maintenus dans des guides 25. L'invention n'est pas limitée aux exemples de réalisation représentés et décrits en détail, car diverses modifications peuvent y être apportées sans sortir de son cadre.

**Revendications**

1. Procédé pour le surmoulage par une matière thermoplastique de connecteurs préalablement mis en place sur l'extrémité de conducteurs électriques (5), dans lequel le surmoulage est effectué dans une presse à injection (16) dans le moule (19) de laquelle le connecteur relié à son conducteur est amené, et dans lequel on procède à l'extraction du moule (19) du connecteur surmoulé avant refroidissement complet de la matière thermoplastique surmoulée, caractérisé en ce qu'on amène ensuite le connecteur surmoulé dans le moule (20) d'une seconde presse (17), ledit moule (20) étant maintenu à une température plus basse que le premier moule, inférieure à celle pour laquelle il serait possible d'introduire la matière thermoplastique, le transfert du connecteur surmoulé, du premier moule au deuxième étant suffisamment rapide, pour prévenir une déformation de la matière non encore solidifiée.

2. Procédé suivant la revendication 1, caractérisé en ce que l'amenée des connecteurs à la presse d'injection est assurée directement à la sortie d'une machine de sertissage (15) des connecteurs sur l'extrémité dénudée de conducteurs.

3. Machine pour le surmoulage d'une matière thermoplastique sur des connecteurs sertis sur l'extrémité dénudée de conducteurs, caractérisée par un transporteur amenant les connecteurs de la machine de sertissage à un premier poste qui comporte des moyens pour la mise en place d'un noyau dans ou sur les parties (23) du connecteur devant être préservées d'un surmoulage, puis à un second poste (16) comportant une presse à injecter dont le moule (19) est maintenu à une température appropriée permettant l'introduction de la matière de surmoulage et à un troisième poste (17) comportant une presse munie d'un moule (20) analogue à celui de la presse à injecter, mais maintenus à une température plus basse, inférieure à celle pour laquelle une injection de matière plastique serait possible.

4. Machine suivant la revendication 3, caractérisée en ce que les presses sont disposées entre deux transporteurs (7, 14) dont l'un (7) provient de la machine de sertissage et dont l'autre (14) est muni de supports de guidage des noyaux introduits sur les parties à protéger des connecteurs.

5. Machine suivant l'une des revendications 3 et 4, caractérisée en ce que le transporteur (14) portant les noyaux est un transporteur sans fin dont les supports (21) pour les noyaux (22) sont espacés d'une même mesure que le pas d'avance desdits transporteurs, pas qui correspond à la distance séparant les postes de travail.

6. Machine suivant l'une des revendications 3 à 5, caractérisée en ce que le transporteur (7) amenant les conducteurs sur lesquels sont sertis les connecteurs est constitué par le transporteur de sortie de la machine de sertissage des connecteurs.

7. Machine suivant l'une des revendications 3 à 6, caractérisée par des moyens de synchronisation établis entre le transporteur amenant les conducteurs munis de leur connecteur et le transporteur portant les mandrins et les noyaux.

## Claims

1. Method for the over-moulding by a thermoplastic material of connectors previously positioned on the end of electrical conductors (5), wherein the over-moulding is carried out in an injection press (16) in the mould (19) of which the connector connected to its conductor is supplied and wherein there is proceeded to the extraction from the mould (19) of the over-moulded connector before complete cooling of the over-moulded thermoplastic material, characterized in that the over-moulded connector is then supplied into the mould (20) of a second press (17), said mould (20) being maintained at a temperature lower that the first mould and less than that for which it would be possible to introduce the thermosplastic material, the transferring of the over-moulded connector from the first mould to the second being sufficiently rapid to prevent a deformation of the material which is not still solidified.

2. Method according to claim 1, characterized in that the supplying of the connectors to the injection press is provided directly at the exit of a machine (15) crimping the connectors on the stripped end of conductors.

3. Machine for the over-moulding of a thermoplastic material on connectors crimped on the stripped end of conductors, characterized by a conveyor supplying the connectors from the crimping machine to a first station which comprises means for positioning a core in or on the parts (23) of the connector having to be protected from an over-moulding, then to a second station (16) comprising an injection press the mould (19) of which is maintained at a suitable temperature enabling introduction therein of the over-moulding material, and to a third station (17) comprising a press provided with a mould (20) similar to that of the injection press, but maintained at a lower temperature and less than that for which an injection of plastics material would be possible.

4. Machine according to claim 3, characterized in that the presses are placed between two conveyors (7, 14), one (7) of which comes from the crimping machine and the other (14) of which is provided with guiding supports for the cores introduced on the portions to be protected of the connectors.

5. Machine according to one of claims 3 and 4, characterized in that the conveyors (14) bearing the cores is an endless conveyor whose supports (21) for the cores (22) are spaced apart of a same measure than the advancement step of said conveyors, which step corresponds to the distance separating the working stations.

6. Machine according to one of claims 3 to 5, characterized in that the conveyor (7) supplying the conductors on which are crimped the connectors is the discharge conveyor of the machine crimping the connectors.

7. Machine according to one of claims 3 to 6, characterized by synchronizing means established between the conveyor supplying the conductors provided with their connector and the conveyor bearing the mandrels and the cores.

**Ansprüche**

1. Verfahren zum Überformen von Verbindungsgliedern, die vorher auf die Enden elektrischer Leitungen (5) aufgebracht wurden, mit thermoplastischem Material, bei dem die Überformung in einer Injektrionspresse (16) ausgeführt und das auf die Leitung aufgebrachte Verbindungsglied einer Form (19) der Presse zugeführt wird, Form in dem man das überformte Verbindungsglied vor dem vollständigen Abkühlen des aufgeformten thermoplastischen Materials aus der Form (19) herausnimmt, dadurch gekennzeichnet, dass überformte Verbindungsglied in die Form (20) einer zweiten Presse (17) dann überführt, wobei diese Presse (20) bei einer Temperatur gehalten wird, die niedriger als diejenige der ersten Form ist und unter der Temperatur liegt, bei welcher die Einführung von thermoplastischem Material unmöglich ist, und wobei die Überführung des überformten Verbindungsgliedes aus der ersten in die zweite Form ausreichend rasch vorgenommen wird, um eine Deformation des noch nicht verfestigten Materials zu verhindern.

2. Verfahren nach Anspruch 1, dadurch gekennzeichnet, dass man die Zuführung der Verbindungsglieder zur Injektionspresse unmittelbar am Ausgang einer Maschine (15) zum Aufsetzen der Verbindungsglieder auf die blank gemachten Enden der Leitungen vornimmt.

3. Vorrichtung zum Überformen eines thermoplastischen Materials auf Verbindungsgliedern, die auf ein Ende von blank gemachten Leitungen aufgesetzt sind, dadurch gekennzeichnet, dass sie eine Fördereinrichtung aufweist, die die Verbindungsglieder, der Aufsetzmaschine bis zu einer ersten Station, die angebrachte Mittel zum Einstellen von Kernen in oder auf vor einer Überformung zu bewahrende Teile (23) des Verbindungsgliedes und danach zu einer zweiten Station (16) mit einer Injektionspresse steuert, deren Form (19) bei einer die Einführung des überformmaterials gestattenden Temperatur gehalten ist, und schliesslich einer dritten Station (17) mit einer Presse, die eine der Form (20) der Injektionspresse entsprechende Form aufweist, wobei diese Form jedoch bei einer niedrigeren Temperatur gehalten ist, die unterhalb derjenigen liegt, bei welcher die Injizierung von Plastikmaterial möglich ist.

4. Vorrichtung nach Anspruch 3, dadurch gekennzeichnet, dass die Pressen zwischen zwei Transporteinrichtungen (7, 14) angeordnet sind, von denen die eine (7) von der Aufsetzmachine herkommt und die andere (14) mit Führungsabstützungen für die Kerne versehen ist, welche ihrerseits an den zu schützenden Teilen der Verbindungsglieder angebracht sind.

5. Vorrichtung nach einem der Ansprüche 3 und 4, dadurch gekennzeichnet, dass die Fördereinrichtung (14), welche die Kerne trägt, ein Endlosförderer ist, an welchem die Abstützungen (21) für die Kerne (22) in einem Ausmass voneinander räumlich getrennt sind, welches dem Vorschubschritt der Fördereinrichtungen entspricht, wobei dieser Schritt seinerseits der Entfernung zwischen den Arbeits stationen entspricht.

6. Vorrichtung nach einem der Ansprüche 3 bis 5, dadurch gekennzeichnet, dass die Fördereinrichtung (7), welche die Leitungen, auf die die Verbindungsglieder aufgesetzt sind, zuführt, von der Ausgangsfördereinrichtung der die Verbindungsglieder auf die Leitungen aufsetzenden Maschine gebildet ist.

7. Vorrichtung nach einem der Ansprüche 3 bis 6, gekennzeichnet durch Synchronisationsmittel zwischen der Fördereinrichtung, welche die mit ihren Verbindungsgliedern versehenen Leitungen zuführt und der Transporteinrichtung, welche die Kerne mit ihren Antriebsvorrichtungen trägt.

**Fig.2**

**Fig.1**

FIG.3

0 037 311